Europäisches Patentamt

European Patent Office

Office européen des brevets

(19)

(11) Numéro de publication: **0 230 843**
**B1**

(12) **FASCICULE DE BREVET EUROPEEN**

(45) Date de publication du fascicule du brevet:
07.02.90

(51) Int. Cl.⁴: **F02N 15/04**, F16H 1/28

(21) Numéro de dépôt: 86420303.9

(22) Date de dépôt: **16.12.86**

(54) **Système de fixation d'une bague annulaire.**

(30) Priorité: **17.12.85 FR 8518892**

(43) Date de publication de la demande:
**05.08.87 Bulletin 87/32**

(45) Mention de la délivrance du brevet:
**07.02.90 Bulletin 90/6**

(84) Etats contractants désignés:
**DE ES IT**

(56) Documents cités:
**EP-A- 0 090 326**
**EP-A- 0 127 372**
**DE-C- 609 654**
**FR-A- 1 055 187**

(73) Titulaire: **EQUIPEMENTS ELECTRIQUES MOTEUR, 2, Rue André Boulle, F-94000 Creteil(FR)**

(72) Inventeur: **Mazzonrana, Alfred Bruno, 12, rue Fernand Léger, F-69200 Venissieux(FR)**

(74) Mandataire: **Karmin, Roger et al, Cabinet MONNIER 150, Cours Lafayette, F-69003 Lyon(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention est relative à un système de fixation élastique d'une bague annulaire et notamment de la couronne extérieure à denture interne d'un réducteur épicycloidal par rapport à une plaque transversale fixe. Un tel système est applicable à n'importe quel mécanisme, mais il est notamment destiné, car c'est dans ce cas que son application paraît devoir présenter le plus d'intérêt, aux réducteurs épicycloïdaux montés sur l'arbre de sortie du moteur électrique d'un démarreur pour moteur thermique.

On sait que les variations brusques de vitesse et les inerties des différentes pièces en mouvement se répercutent au niveau de la couronne extérieure du réducteur, provoquant sur celle-ci des sollicitations anormales qui peuvent provoquer sa rupture.

C'est ainsi que le document EP-A 0 090 326 décrit un système de fixation élastique de la couronne à denture intérieure d'un train d'engrenages planétaires par rapport à une plaque transversale fixe comprenant des poutres élastiques orientées axialement et connectées d'une part à la plaque et d'autre part à La couronne dans des encoches ménagées sur ces deux organes.

Les perfectionnements qui font l'objet de la présente invention visent à permettre la réalisation d'un dispositif élastique qui soit susceptible d'occuper un espace libre situé à l'intérieur du carter d'un appareil tel qu'un démarreur pour moteur à combustion interne, cet espace se trouvant situé autour de l'entraîneur de son lanceur, le système suivant l'invention permettant d'améliorer les résultats obtenus au moyen du mécanisme antérieurement connu.

A cet effet le système de fixation suivant l'invention comprend:

– un disque de matière semi-rigide solidaire de la plaque;

– des aiguilles élastiques orientées axialement et encastrées dans le disque, lesdites aiguilles étant engagées dans des encoches ménagées sur la périphérie de la couronne;

– et une butée maintenant la couronne axialement avec jeu fonctionnel.

Le dessin annexé, donné à titre d'exemple, permettra de mieux comprendre l'invention, les caractéristiques qu'elle présente et les avantages qu'elle est susceptible de procurer:

Fig. 1 est une vue éclatée des différents éléments composant le système de fixation suivant l'invention.

Fig. 2 en est une vue à l'état monté.

Fig. 3 et 4 montrent la manière dont fonctionne le système de fixation élastique suivant l'invention.

Fig. 5 et 6 illustrent en coupe la forme des bords des encoches dans lesquelles se trouvent les aiguilles élastiques.

Le système illustré sur le dessin est destiné à la fixation élastique d'une couronne 1 constituant préférablement la couronne extérieure à denture interne d'un réducteur épicycloïdal par rapport à une plaque transversale 2 fixe et assujettie au carter d'un appareil. Dans une application avantageuse, la plaque 2 est traversée par l'arbre sur lequel coulisse le lanceur d'un démarreur électrique, et cette plaque est solidarisée au carter de ce dernier.

Un disque 3, réalisé en une matière plastique semi-rigide appropriée telle que le nylon, est surmoulé par rapport à la plaque 2 de manière à devenir solidaire de cette plaque. A cet effet, le disque 3 comporte une collerette extrême $3^a$ recouvrant une partie de la face de la plaque opposée à celle qui reçoit ledit disque. Ainsi, une partie de la plaque est emprisonnée dans le disque. Ce dernier comporte des lumières borgnes oblongues $3\underline{b}$ orientées suivant une circonférence concentrique à l'alésage central $2^a$ de la plaque 2, et dans le fond de chacune desquelles est encastrée une aiguille élastique 4 qui dépasse très largement au-delà de la collerette $3^a$ située à l'opposé du disque 3 lui-même. Ces aiguilles, qui sont avantageusement réalisées en acier, sont destinées à s'engager dans des encoches $1^a$ de la périphérie de la couronne 1. A cet effet, la périphérie de la couronne 1, qui affecte la forme d'une portion de sphère pour des raisons que l'on expliquera mieux plus loin, est pourvue de deux dépressions opposées $1\underline{b}$, $1\underline{c}$ dans lesquelles se trouvent deux dents $1\underline{d}$, $1\underline{e}$ en vis-à-vis qui déterminent l'encoche correspondante $1^a$.

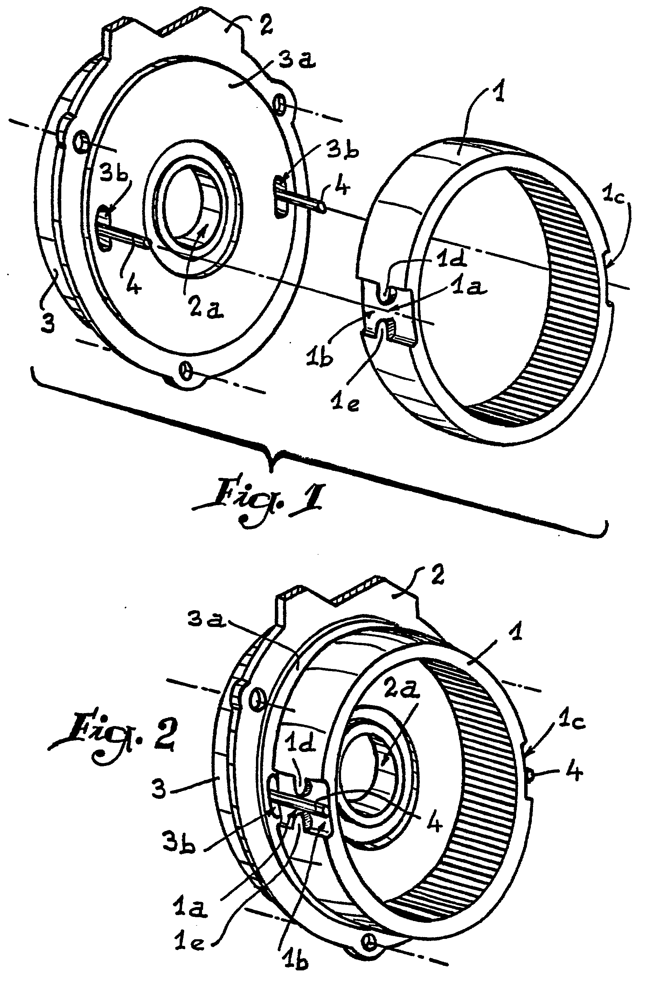

Une fois les aiguilles encastrées dans le fond des lumières $3\underline{b}$, elles maintiennent donc la périphérie de la couronne 1, comme illustré en fig. 2.

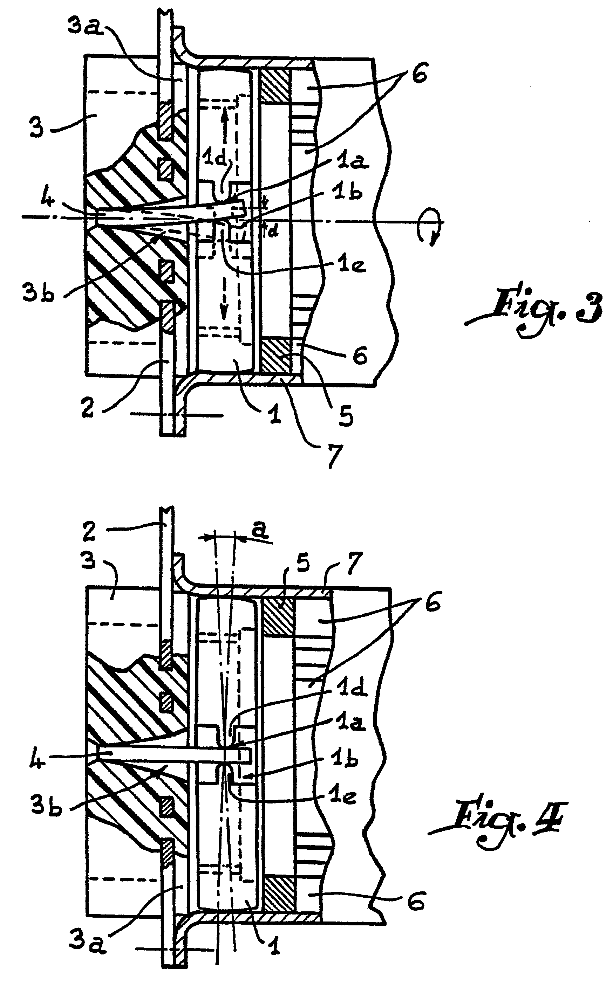

Les efforts de rotation encaissés par la couronne 1 sont transmis par celle-ci aux aiguilles 4 (fig. 3) qui se déforment pour assurer la retenue angulaire de la couronne 1. On observe dans cette figure la présence d'une bague 5 réalisée en une matière amagnétique qui détermine avec la collerette $3\underline{a}$ du disque 3 un espace dans Lequel se loge avec jeu fonctionnel la couronne 1. Dans le cas particulier d'un démarreur électrique pour moteur thermique, ce sont les aimants 6 de son inducteur qui maintiennent la bague 5 longitudinalement, celle-ci étant retenue extérieurement par la carcasse 7 dudit moteur.

On note que la périphérie de la couronne 1 présente, au jeu fonctionnel près, un diamètre maximal égal à celui intérieur de la carcasse 7.

On observe que le débattement des aiguilles élastiques 4 est facilité par le fait que les lumières $3\underline{b}$ sont de forme oblongue et présentent une conicité générale à partir de l'ancrage des aiguilles en direction de leur débouché. On note aussi que la plaque 2 présente des ouvertures disposées au droit des lumières $3\underline{b}$ pour permettre le passage des aiguilles.

Dans le cas de l'illustration de fig. 3,5 et 6 les aiguilles sont déformées par un déplacement angulaire de la couronne 1 qui a été référencé $\underline{d}$ en vue d'assurer le centrage du réducteur.

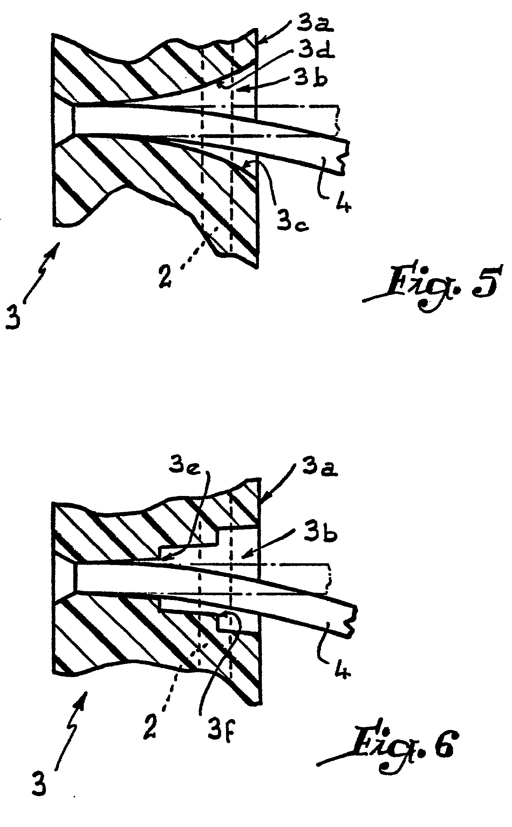

Fig. 4 montre comment la cage 1 peut osciller par rapport à la carcasse 7 du fait que sa périphérie affecte la forme d'une portion de sphère. Le déplacement de la cage à été dans ce cas représenté par un angle $\underline{a}$.

Fig. 5 et 6, on a illustré en détail la forme des bords extrêmes des lumières 3b, c'est-à-dire ceux avec lesquels les aiguilles 4 coopèrent.

Dans la forme d'exécution de fig. 5, les bords 3c, 3d des lumières comportent un profil tel que le bras de levier engendré par les aiguilles 4 varie en longueur suivant une loi déterminée.

Dans la variante de fig. 6, on prévoit des arêtes 3e, 3f en escalier provoquant des variations de flexibilité de chaque aiguille 4 en fonction de l'arête sur laquelle elle prend appui.

Ainsi, le profil des bords 3c, 3d permet d'obtenir une variation de la flexibilité des aiguilles 4, de manière soit continue, soit discontinue.

On a ainsi réalisé un système de fixation élastique permettant un centrage parfait de la couronne extérieure 1 à denture interne d'un réducteur épicycloïdal monté dans un boîtier. On notera que si dans l'exemple ci-dessus, il a été fait allusion à la présence de deux aiguilles, rien n'empêche d'en prévoir un nombre quelconque en fonction des besoins.

## Revendications

1. Système de fixation élastique de la couronne à denture intérieure d'un train d'engrenages planétaires par rapport à une plaque transversale fixe comprenant des poutres élastiques axiales connectées à la plaque et à la périphérie de la couronne, caractérisé en ce qu'il comprend:
   – un disque (3) de matière semi-rigide solidaire de la plaque (2);
   – des aiguilles élastiques (4) orientées axialement et encastrées dans le disque (3), lesdites aiguilles (4) étant engagées dans des encoches (1a) ménagées sur la périphérie de la couronne (1);
   – et une butée (5) maintenant la couronne (1) axialement avec jeu fonctionnel.

2. Système de fixation suivant la revendication 1, caractérisé en ce que les aiguilles (4) sont encastrées dans le fond de lumières oblongues (3b) du disque (3) permettant un débattement angulaire desdites aiguilles.

3. Système de fixation suivant la revendication 1, caractérisé en ce que le disque (3) est surmoulé sur la plaque (2).

4. Système de fixation suivant la revendication 1, caractérisé en ce que la couronne (1) est maintenue axialement avec jeu fonctionnel entre le disque (3) et une bague de matière amagnétique (5) maintenue axialement en place par l'inducteur d'un moteur.

5. Système de fixation suivant la revendication 1, caractérisé en ce que la périphérie de la couronne (1) affecte la forme d'une portion de sphère afin qu'elle puisse se déplacer à la manière d'une rotule.

6. Système de fixation suivant la revendication 2, caractérisé en ce que les bords extrêmes (3c, 3d) des lumières (3b) affectent un profil assurant un débattement déterminé des aiguilles (4) de façon à obtenir une variation de flexibilité de celles-ci de manière soit continue, soit discontinue.

7. Système de fixation suivant la revendication 6, caractérisé en ce que les bords (3c, 3d) des lumières (3b) affectent un profil continu.

8. Système de fixation suivant la revendication 6, caractérisé en ce que les bords (3c, 3d) des lumières (3b) comportent des arêtes en escalier (3e, 3f).

## Patentansprüche

1. System zur elastischen Befestigung des Innenzahnkranzes eines Planetengetriebes im Verhältnis zu einer feststehenden Querplatte, bestehend aus axialen, elastischen Trägern, die mit der Platte und der Peripherie des Zahnkranzes verbunden sind, dadurch gekennzeichnet, daß es folgendes enthält:
   – eine Scheibe (3) aus halbstarrem Material, fest mit der Platte (2) verbunden,
   – elastische Nadeln (4), die axial ausgerichtet sind und in die Scheibe (3) eingreifen, wobei die genannten Nadeln (4) in Einschnitte (1a) an der Peripherie des Kranzes (1) eingreifen,
   – und einen Anschlag (5), der den Kranz (1) axial mit einem funktionsgemäßen Spiel festhält.

2. Befestigungssystem nach Anspruch 1, dadurch gekennzeichnet, daß die Nadeln (4) im Boden von Längsschlitzen (3b) der Scheibe (3) eingelassen sind, wodurch eine Winkelverschiebung der genannten Nadeln ermöglicht wird.

3. Befestigungssystem nach Anspruch 1, dadurch gekennzeichnet, daß die Scheibe (3) der Platte (2) überformt ist.

4. Befestigungssystem nach Anspruch 1, dadurch gekennzeichnet, daß der Kranz (1) axial mit einem funktionsgemäßen Spiel zwischen der Scheibe (3) und einem Ring aus unmagnetischem Material (5) festgehalten wird, der axial durch den Feldmagneten eines Motors an seinem Platz gehalten wird.

5. Befestigungssystem nach Anspruch 1, dadurch gekennzeichnet, daß die Peripherie des Kranzes (1) die Form eines kugeligen Abschnitts hat, um nach Art eines Kugelgelenks verlagert werden zu können.

6. Befestigungssystem nach Anspruch 2, dadurch gekennzeichnet, daß die Abschlußränder (3c, 3d) der Schlitze (3b) ein Profil aufweisen, welches eine bestimmte Verschiebung der Nadeln (4) gewährleistet, um so eine Veränderung der Flexibilität derselben, entweder auf kontinuierliche oder diskontinuierliche Weise, zu bewirken.

7. Befestigungssystem nach Anspruch 6, dadurch gekennzeichnet, daß die Ränder (3c, 3d) der Schlitze (3b) ein durchgehendes Profil aufweisen.

8. Befestigungssystem nach Anspruch 6, dadurch gekennzeichnet, daß die Ränder (3c, 3d) der Schlitze (3b) treppenförmige Kanten (3e, 3f) aufweisen.

## Claims

1. System for the resilient fixing of the internally toothed collar of a planetary gear train with respect to a fixed transverse plate comprising resilient axial beams connected to the plate and to the periphery of the collar, characterised in that it comprises:
   – a disc (3) of semi-rigid material integral with the plate (2);
   – resilient pins (4) oriented axially and housed in the disc (3), the said pins (4) being engaged in

notches (1a) provided on the periphery of the collar (1);

– and an abutment (5) maintaining the collar (1) axially with functional clearance.

2. Fixing system according to Claim 1, characterised in that the pins (4) are housed in the bottom of oblong apertures (3b) in the disc (3) allowing an angular clearance of the said pins.

3. Fixing system according to Claim 1, characterised in that the disc (3) is moulded upon the plate (2).

4. Fixing system according to Claim 1, characterised in that the collar (1) is retained axially with functional clearance between the disc (3) and a ring (5) of nonmagnetic material held axially in place by the inductor of a motor.

5. Fixing system according to Claim , characterised in that the periphery of the collar (1) assumes the shape of a portion of a sphere in order that it is able to move in the manner of a swivel joint.

6. Fixing system according to Claim 2, characterised in that the terminal edges (3c, 3d) of the apertures (3b) assume a profile ensuring a predetermined clearance of the pins (4) in order to obtain a variation of flexibility of the latter in either a continuous or discontinuous manner.

7. Fixing system according to Claim 6, characterised in that the edges (3c, 3d) of the apertures (3b) assume a continuous profile.

8. Fixing system according to Claim 6, characterised in that the edges (3c, 3d) of the apertures (3b) comprise stepped edges (3e, 3f).

*Fig. 1*

*Fig. 2*

*Fig. 3*

*Fig. 4*

*Fig. 5*

*Fig. 6*